# EUROPEAN PATENT APPLICATION

(11) **EP 1 849 999 A2**
(43) Date of publication of application: **31.10.2007**
(21) Application number: 07251675.0
(22) Date of filing: 20.04.2007
(51) Int. Cl.: F03B 3/00, F03B 3/06

(54) **Floating hydroelectric power generation plant**

(30) Priority: 25.04.2006 GB 0608091
(71) Applicant: Kelvin, Steven Barry, Burnhill Place Coalsmannanshire FK13 6JW (GB)
(72) Inventor: Kelvin, Steven Barry, Burnhill Place Coalsmannanshire FK13 6JW (GB)
(74) Representative: Campbell, Arlene

(57) **Abstract**

A floating power generation plant (10) having a floating vessel (12) having a body (14) including first and second hulls (16, 18) arranged parallel to each other providing a channel (20) therebetween. The plant (10) has a turbine (22) located substantially centrally along the channel (20). Any portion of the turbine (22) lying between the hulls (16, 18) is entirely located within the body (14). The plant (10) further comprises electrical generation means (26).

## Description

The present invention relates to an electrical power generation plant using water flow and in particular, though not exclusively, to a floating generation plant being a self contained vessel providing a constricted central channel such that water enters the channel under the venturi effect to a turbine located therein producing minimal turbulence outside the vessel.

It has been recognised for some time that power can be harnessed from tidal streams and river currents which can be converted to electrical power by locating water wheels in these streams and currents. A variety of arrangements have been proposed to locate the water wheels or turbines on to vessels which are moored offshore or in waterways to take advantage of the tidal streams and river currents. While these - arrangements are considered advantageous in providing a renewable energy source they have a major disadvantage by their environmental impact.

This disadvantage results from the size of vessels required to harness sufficient power to make the generation plant economically viable. Further the present arrangements position the vanes or blades of the turbine (water wheel) towards the extremities of, or outside the vessel to obtain the maximum water flow rate against the blades. This is particularly prevalent in vessels arranged in rivers or smaller waterways. A large amount of turbulence is created around the turbine and as a result the river ecosystem is disturbed particularly as the turbulence causes disturbance and erosion of the river bed and banks.

It is an object of the present invention to provide a floating power generation plant which causes minimal environmental impact.

According to a first aspect of the present invention there is provided a floating power generation plant, the plant comprising a floating vessel having a body including first and second hulls arranged parallel to each other providing a channel therebetween, a turbine located in the channel and electrical generation means characterised in that the turbine is located substantially centrally along the channel and any portion of the turbine lying between the hulls is entirely located within the body.

In this way the turbine does not extend outside the body of the vessel below the water line and thus any turbulence is contained within the vessel thereby minimising environmental impact. The twin hull arrangement further increases the velocity of water flow in the channel by utilising the venturi principle and thus provides enhanced power generation over that which would result from the natural velocity of water flow. A smaller vessel can therefore be constructed which also reduces the environmental impact of the plant.

Preferably, the hulls are arranged to provide a narrowing of the channel at the turbine. More preferably, each hull has an inner surface which is tapered away from the turbine. This enhances the venturi effect. The tapering may be elliptical or exponential to further enhance the effect.

The vessel may be a catamaran, barge, ship or other suitable floating structure. The hulls are joined to keep the channel dimensions constant. Preferably the hulls are joined full length and width which in use, is below the water. This further assists in containing the turbulence within the body.

Advantageously the leading and trailing edges of the inner surfaces of each hull are also tapered. Tapering of these surfaces increases the venturi effect.

Preferably also, the inner surfaces of the hulls are symmetrical about a longitudinal axis along the centre of the channel. This ensures a uniform velocity of water against the blades of the turbine.

Advantageously, the inner surfaces of the hulls are symmetrical about an axis perpendicular to the longitudinal axis at the centre of the body. This provides a double ended vessel allowing the water to flow in either direction through the turbine.

The turbine may be a reaction turbine or, alternatively, an impulse turbine. The turbine may be a water wheel. Preferably the turbine has a predetermined number of blades, the number being selected to be a minimum required, thereby decreasing turbulence and environmental impact. The turbine may be a Kaplan turbine.

Advantageously the turbine comprises one or more blades arranged to operate from water flow in either direction across the blade. In this way, the turbine may be a reversible turbine.

The inner surfaces of the hulls may be shaped to provide a part-circumferential surface giving a substantially cylindrical channel between the hulls. Such an arrangement increases the venturi effect through propeller like turbines e.g. Kaplan turbine.

The generator means may be any as known in the art. Additionally, a power transmission cable may be included to connect the generator to the national grid or other electricity distribution network. One or more batteries may also be located on the vessel for storing electricity for later use.

Preferably, there is located one or more debris grills at an inlet of the channel. Such a grill protects the turbine from damage by unwanted matter while also preventing fish, animals or vegetation from entering the turbine.

The vessel may include a plurality of turbines. The inner surfaces may be arranged to provide a multiple venturi. Optionally, a gate may be located at an inlet of each venturi. In this way, the water flow may be channelled to a single turbine to take advantage of different states of tide and different lunar states.

According to a second aspect of the present invention, there is provided a method of generating power from a flow of water, the method comprising the steps;
(a) mooring a floating power generation plant, according to the first aspect, in a water flow of a first velocity;
(b) directing water through the channel in the vessel at a second velocity which is greater than the first velocity by the venturi principle;
(c) driving the turbine from the water flow in the channel while containing the turbulence within the body of the vessel; and
(d) generating electrical power from the rotation of the turbine.

In this way, electrical power is generated with minimal disturbance to the environment.

The method may include the step of transmitting the power to a power generation network such as the national grid. Alternatively, or additionally, the method may include the step of storing the generated power in a battery.

The method may include the step of arranging the vessel to float at a predetermined depth in the water. The depth may be selected to ensure that the hulls are joined below the water line.

The method may include the step of operating one or more gates to divert the flow of water to a particular turbine.

An embodiment of the present invention will now be described, by way of example only, with reference to the accompany drawings of which:

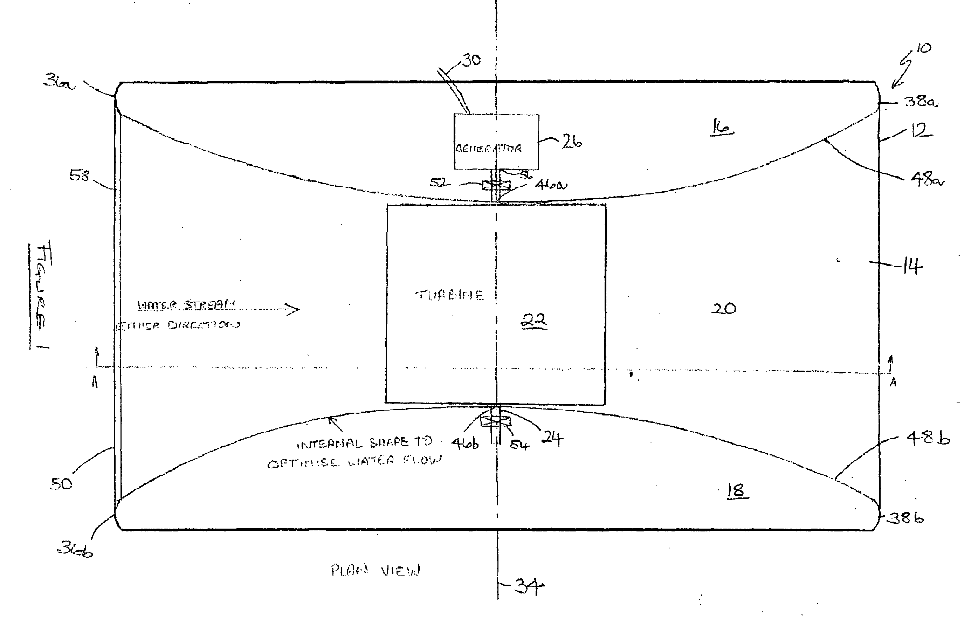

Figures 1 is a schematic plan view of a floating power generation plant according to an embodiment of the present invention;

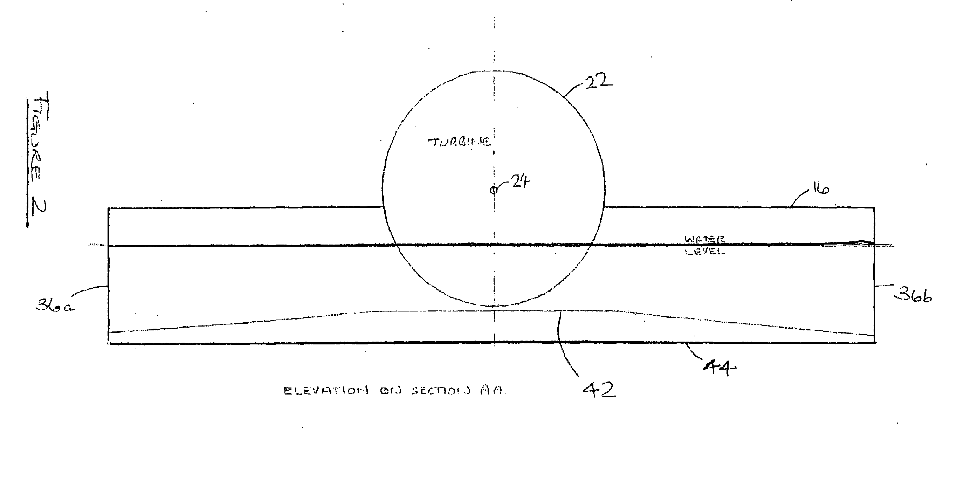

Figure 2 is a side elevation on section A-A of the embodiment of Figure 1; and

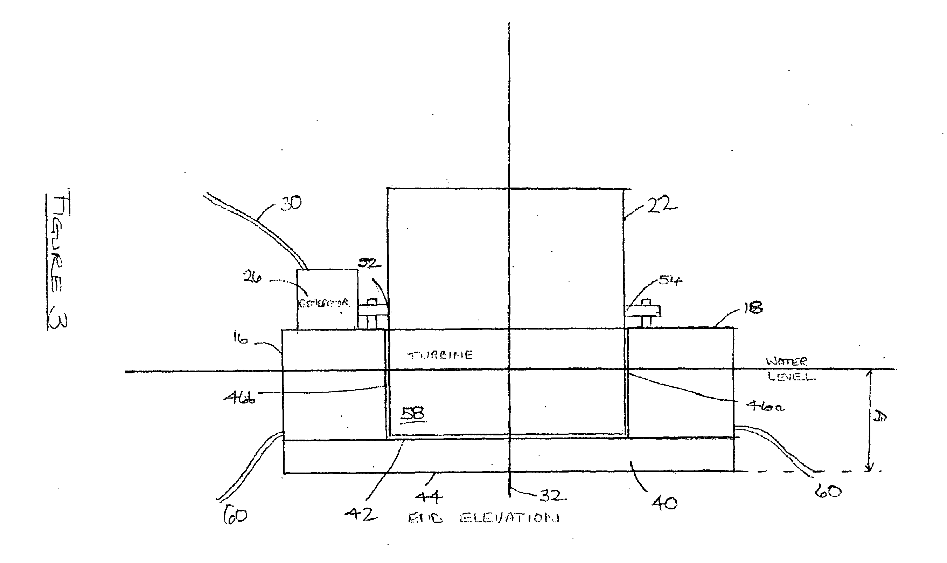

Figure 3 is an end elevation of the embodiment of Figure 1; and
Figure 4 is a side elevation of an alternative embodiment of the floating power generation plant.

Referring to the drawings, there is illustrated a floating power generation plant, generally indicated by reference numeral 10, according to an embodiment of the present invention. Plant 10 comprises a vessel 12, having a body 14. The body 14 includes two hulls 16, 18 between which is located a channel 20. Located between the hulls 16, 18 in the channel 20 is a turbine 22. The rotor 24 of the turbine 22 is linked to a generator 26 in which electrical power is generated and transported via a transmission line 30 for use onshore.

Each hull 16, 18 is identical and oppositely arranged on a longitudinal axis 32 lying centrally along the body 14. Additionally the hulls 16, 18 are symmetrical about a traverse axis 34, lying perpendicular to the longitudinal axis 32 at the centre of the body 14.

The hulls 16, 18 are joined from their leading ends 36a,b to their trailing ends 38a,b by a member 40. Member 40 may be provided as a supporting steelwork structure which is then plated over to provide upper 42 and lower 44 surfaces along the length of the body 14. The lower surface 44 is planar and parallel to the traverse axis 34.

Each hull 16, 18 includes an inner surface 48a,b. These surfaces 48a,b face each other across the channel 20. The surfaces 48a,b are tapered. More preferably, they are curved being elliptical or falling exponentially from a centre point 46a,b to the leading 36a,b and trailing 38a,b edges respectively. The narrowest point across the channel is between the centres 46a,b.

The internal shape of the hulls 16, 18 optimises water flow through the channel 20 by utilising the venturi principle. This principle states that for a given flow rate, the velocity can be increased through a reduced cross sectional area. Indeed, the velocity and cross-sectional area are inversely proportional. The cross-sectional area at an inlet 50 to the channel 20 will be the distance between the leading edges 36a,b multiplied by the depth of water above the upper surface 42. As the distance decreases to the centre 46a,b, the velocity will rise accordingly at this point 46a,b in the channel 20.

Additionally the upper surface 42 is arranged to taper from the centre 46a,b to the leading 36a,b and trailing 38a,b edges respectively. This further increases the velocity by reducing the depth at the centre 46a,b. The inlet 50 is therefore convergent and the outlet is divergent.

Advantageously, the water flow rate remains constant through the entire channel 20 and thus the presence of the plant 10 in a water way will not adjust the flow rate of the water on either side of the vessel 12.

Located between the inner surfaces 48a,b at the centre 46a,b is the turbine 22. It will be appreciated by those skilled in the art that any turbine arrangement could be used and therefore a description of the operation of every type of turbine is not required. The precise type of turbine chosen will be dependant upon the volume and flow rate of water expected through the channel 20. If appropriate to the type of turbine chosen e.g. Kaplan turbine, the surfaces 48a,b and 42 could be arranged to form a cylindrical cross-sectional area through the channel 20. However, regardless of the type of turbine selected, it must not extend out of the channel 20 at the leading 36a,b or trailing ends 38a,b and neither can it extend lower than the surface 44 at the base of the hulls 16,18.

In the embodiment shown the turbine 22 is a water wheel and provides a rotor 24 turned by the action of water upon blades or vanes on the wheel. Preliminary research has shown that a smaller number of blades than would usually be expected, are more effective.

Rotor 24 is supported upon each hull through bearings 52,54. An end 56 of the rotor 24 enters a generator 26 where, by standard principles, electrical power is generated. The power can be stored in a battery on the vessel 12 or may be transmitted directly by a cable 30 to an onshore distribution or storage facility.

A debris grill 58 is fitted across the inlet 50. The grill 58 may be a mesh or screen whose grid size is selected to minimise the size of debris that can enter the channel 20, while not reducing the flow rate of water through the channel 20. The size is also selected to exclude the majority of marine life from entering the channel.

A further embodiment of the present invention may be provided with multiple turbines. The turbines may be arranged in series or parallel in the channel 20. If arranged in a line across the channel 20, baffles or other dividers can be used to separate the flow to each turbine. In this way, gates or other closures may be located at the inlet 50 across each flow path to a turbine. By selective operation of the gates, the number of turbines and the velocity through the turbines can be varied to maximise power generation from the available flow rate.

In use, the self contained vessel 12 is towed or otherwise propelled to a suitable site. As the vessel 12 is self contained a variety of sites can be tried before a selection is made. At the chosen site the vessel 14 is moored. This is achieved by tying down guy lines 60. The guy lines 60 may be anchored to the sea or river bed. Alternatively they may be secured to points on the shore. A sufficient number of guy lines are required to ensure the vessel 12 remains orientated with the longitudinal axis 32 parallel with the direction of flow in the stream or current.

The vessel 12 is submerged to a calculated depth, D, this being sufficient to cover a portion of the turbine 22 while keeping the water within the channel 20. In order to avoid cavitation of the turbine, it is preferable to have the inlet 50 completely submerged.

Once located, water at its natural flow rate will enter the vessel 12 at the inlet 50. As the channel 20 reduces in cross-sectional area, the venturi effect occurs wherein the velocity of the water increases towards the turbine. Additionally, a drop in pressure is experienced towards the turbine which draws water into the channel 20 to maintain a flow through the channel 20.

The turbine 22 is arranged to block the passage of water through the channel 20. Each turbine blade will form a temporary barrier to the water flow which, through its own kinetic energy, will back up behind the blade, creating a head of water. The flow of the water past the vessel will draw the water away from behind the blade, thereby lowering the water level and increasing the differential. This change in level is not typically seen by the naked eye due to the speed of the turbine. The resultant rotation of the turbine 22 is transmitted via the rotor 24 to the generator 26 whereupon it is converted to electrical power.

At the time of mooring, a connection 30 is made between the vessel 12 and the national grid on land. The electrical power is thus transferred direct to the national grid.

Where the plant is operated in tidal conditions, a larger vessel can constructed. In operation, this vessel may utilise the power in the Ebb and Flood tide by taking advantage of a reversible turbine, which will operate with flow passing in either direction through the channel. To take advantage of lower flow rates at different states of tide and different lunar states i.e. spring tides, which have high flow rates and neap tides with low flow rates, gates may be opened and closed selectively in front of a number of turbines. The closing of gates effectively increases the velocity of the water to the remaining operational turbine(s).

The principal advantage of the present invention is that it provides a floating power generation plant which causes minimal environmental impact as the turbulence created is contained within the vessel.

A further advantage of the present invention is that it provides a floating power generation plant which is entirely self-contained, requiring minimal permanent infrastructure. The vessel can be built at any suitable construction yard and then sail to the installation site to be moored on a semi-permanent basis with the only permanent facility being the national grid connection.

A further advantage of an embodiment of the present invention is that it provides a floating power generation plant which is double ended allowing water to flow in either direction through the plant to generate power.

A still further advantage of the present invention is that it provides a method of generating electricity wherein the plant can be moved to a variety of sites to ascertain the ideal site prior to installing the grid connection.

A yet further advantage of the present invention is that it provides an apparatus and method for hydroelectric power generation which is environmentally friendly as, in use, it should not absorb more than 25% of the available power in a water flow and should have little effect on the surroundings as embodiments can be constructed with an operational height of less than the normal tree line.

Various modifications may be made to the invention hereindescribed without departing from the scope thereof. For example, an additional supporting structure, which could be in steelwork, can be arranged between the hulls above the surface of the water line. This will assist in preventing separation of the hulls and offer additional space on the vessel. The size of the vessel may vary with application. The generating capacity of the plant will be restricted only by ship building capacity and thus may depend on the country of construction. For the smallest plants used in rivers, their size and generating capacity is likely to be governed by economic viability.

Also, although the inlet 50 has been illustrated as being rectangular, it should be appreciated that the inlet 50 may be an alternative shape, for example, square.

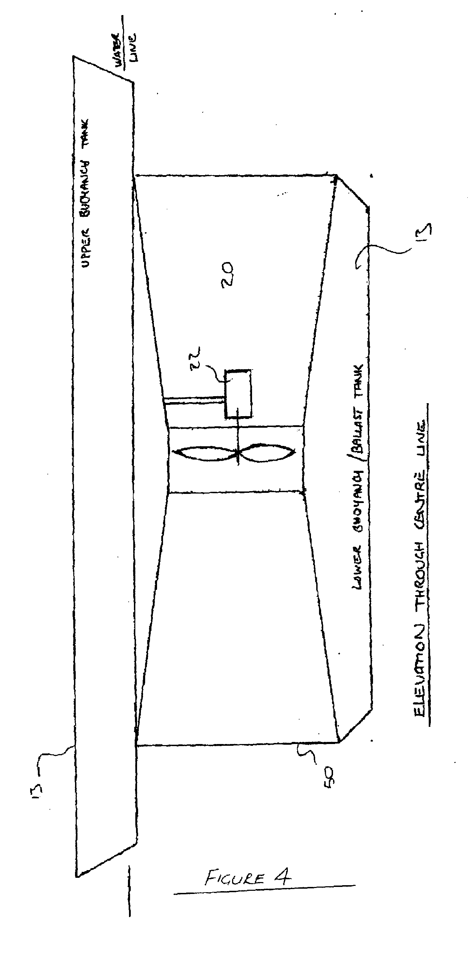

Furthermore, as illustrated in Figure 4, it should be appreciated that the vessel 12 may also be provided with upper and/or lower ballast tanks 13 which can be used to raise the vessel 12 out of the water in the conventional manner. This facilitates easy maintenance of the plant 10. The ballast tank 13 may be divided into one or more segments.

Alternatively, the vessel 12 may be provided with extendible legs, e.g. Jacklegs, to raise the vessel out of the water.

Also, the hulls 16, 18 may extend over the inlet 50 and/or outlet such that the hulls 16, 18 overhang the inlet 50 or outlet. This keeps the vessel 12 horizontal when water enters the inlet 50 (or outlet, depending on which direction the water is flowing).

Furthermore, where the plant 10 is only used in a river, the outlet does not need to be symmetrical with the inlet 50, as the water flow will not change direction and will have lost some of its energy so can be returned to the river more quickly.

Also, although only a single plant 10 has been described above, it should be appreciated that a number of plants 10 may be provided side-by-side, e.g. extending across a river. In such a case the rotors of each turbine 22 rotates in the opposite direction to that of the adjacent turbine 22. This prevents the plants 10 from twisting in the river as a result of the torque generated by each turbine 22, as the opposite directions of rotations cancels the twisting action.

Furthermore the turbine 22 has been illustrated as being mounted in the centre of the channel 20, it should be appreciated that the turbine 22 may be mounted closer to the inlet 50 or outlet to let excess pressure escape around the sides of the turbine 22.

## Claims

**1.** A floating power generation plant (10), the plant comprising:
a floating vessel (12) having a body (14) including first and second hulls (16, 18) arranged parallel to each other providing a channel (20) therebetween,
a turbine (22) located in the channel (20); and
electrical generation means (26), **characterised in that** the turbine (22) is located substantially centrally along the channel (20) and any portion of the turbine (22) lying between the hulls (16, 18) is entirely located within the body (14).

**2.** A floating power generation plant (10) as claimed in claim 1, wherein the hulls (16, 18) are arranged to provide a narrowing of the channel (20) at the turbine (22).

**3.** A floating power generation plant (10) as claimed in claim 1 or.claim 2, wherein each hull (16, 18) has an inner surface (48a, b) which is tapered away from the turbine (22).

**4.** A floating power generation plant (10) as claimed in claim 3, wherein the tapering is elliptical or exponential.

**5.** A floating power generation plant (10) as claimed in any preceding claim, wherein the hulls (16, 18) are joined.

**6.** A floating power generation plant (10) as claimed in claim 5, wherein the hulls (16, 18) are joined along their full length and width.

**7.** A floating power generation plant (10) as claimed in any of claims 3 to 6, wherein the leading and trailing edges of the inner surfaces (48a, b) of each hull (16, 18) are tapered.

**8.** A floating power generation plant (10) as claimed in any of claims 3 to 7, wherein the inner surfaces (48a, b) of the hulls (16, 18) are shaped to provide a part-circumferential surface giving a substantially cylindrical channel between the hulls (16, 18).

**9.** A floating power generation plant (10) as claimed in any of claims 3 to 8, wherein the inner surfaces (48a, b) of the hulls (16, 18) are symmetrical about a longitudinal axis (32) along the centre of the channel (20).

**10.** A floating power generation plant (10) as claimed in any of claims 3 to 9, wherein the inner surfaces (48a, b) of the hulls (16, 18) are symmetrical about an axis (34) perpendicular to the longitudinal axis (32) at the centre of the body (14).

**11.** A floating power generation plant (10) as claimed in any preceding claim, wherein the vessel (12) is a catamaran, barge or ship.

**12.** A floating power generation plant (10) as claimed in any preceding claim, wherein the turbine (22) is a reaction turbine, an impulse turbine, a Kaplan turbine or a water wheel.

**13.** A floating power generation plant (10) as claimed in any preceding claim, wherein the turbine (22) has a predetermined number of blades, the number being selected to a minimum required.

**14.** A floating power generation plant (10) as claimed in any preceding claim, wherein the turbine (22) comprises one or more blades arranged to operate from water flow in either direction across the blade, such that the turbine (22) is reversible.

**15.** A floating power generation plant (10) as claimed in any preceding claim, wherein the floating power generation plant further comprises a power transmission cable to connect the electrical generation means to the national grid or other electricity distribution network.

**16.** A floating power generation plant (10) as claimed in any preceding claim, wherein the floating power generation plant (10) further comprises one or more batteries located on the vessel (12) for storing electricity for later use.

**17.** A floating power generation plant (10) as claimed in any preceding claim, wherein the floating power generation plant (10) further comprises one or more debris grills (58) at an inlet (50) of the channel (20).

**18.** A floating power generation plant (10) as claimed in any preceding claim, wherein the floating power generation plant (10) comprises a plurality of turbines (22).

**19.** A floating power generation plant (10) as claimed in claim 18, wherein the inner surfaces (48a, b) of the hulls (16, 18) are arranged to provide a plurality of inner surfaces (48a, b) which taper away from each turbine (22).

**20.** A floating power generation plant (10) as claimed in claim 19, wherein each inner surface (48a, b) comprises an inlet 50 and each inlet (50) comprises a gate for blocking the inlet.

**21.** A method of generating power from a flow of water, the method comprising the steps of:
(a) mooring a floating power generation plant (10), according to any of claims 1 to 20, in a water flow of a first velocity;
(b) directing water through the channel (20) in the vessel (12) at a second velocity which is greater than the first velocity by the venturi principle;
(c) driving the turbine (22) from the water flow in the channel (20) while containing the turbulence within the body of the vessel (12);
(d) generating electrical power from the rotation of the turbine (22).

**21.** A method of generating power from a flow of water as claimed in claim 21, wherein the method comprises the further step of transmitting the power to a power generation network.

**22.** A method of generating power from a flow of water as claimed in claim 21, wherein the method comprises the further step of transmitting the power to one or more batteries.

**23.** A method of generating power from a flow of water as claimed in any of claims 21 to 23, wherein the method comprises the further step of arranging the vessel (12) to float at a predetermined depth in the water.

**24.** A method of generating power from a flow of water as claimed in any of claims 21 to 24, when dependent upon claim 20, wherein the method comprises the further step of operating one or more gates to divert the flow of water to a particular turbine (22).
